# EUROPEAN PATENT APPLICATION

(11) **EP 4 492 252 A1**
(43) Date of publication of application: **15.01.2025**
(21) Application number: 24188068.1
(22) Date of filing: 11.07.2024
(51) Int. Cl.: G06F 16/176, G06F 16/23

(54) **LOCK ON READ TECHNIQUES FOR IMPROVED FILE SYSTEM PERFORMANCE**

(30) Priority: 13.07.2023 US 202318221811
(71) Applicant: VMware LLC, Palo Alto, CA 94304 (US)
(72) Inventor: Dillon, David, Reading, 01867 (US); Georgiev, Kostadin, 1766 Sofia (BG)
(74) Representative: Dilg, Haeusler, Schindelmann Patentanwaltsgesellschaft mbH

(57) **Abstract**

The disclosure provides a method for storing data in a datastore (104). The method generally includes storing first data from a first data producer (102) in a first file maintained in the datastore (104), receiving a read input/output, I/O, request to read the first data stored in the first file, in response to receiving the read I/O request, locking data in the first file to prevent further data from being stored in the first file, processing the read I/O request, and creating a second file for storing at least second data from the first data producer (102).

## Description

An analytics database, also referred to as an analytical database, is a data management platform that stores and organizes data, such as for the purpose of business intelligence (BI) and analytics. Analytical databases store massive amounts of data that organizations use to gain insight into their business, customers, etc.

Three major components of analytical databases are the data model (also referred to herein as the "datastore" and "file system"), the query language, and the query engine that uses the query langue for processing large volumes of data stored in the data model. The data model is the structure through which data is stored. Data models can be relational - where data is stored in separate tables and joined together when necessary - or object-oriented - where data is stored in fields of objects and represented as objects in software. For example, in some cases, the data model is an object storage provided by Amazon Simple Storage Service (S3), provided by Amazon Web Services (AWS) and made commercially available by Amazon.com, Inc. of Seattle, Washington. Amazon S3 is an object storage service that stores data as objects within buckets, where an object is a file and any metadata that describes the file, and a bucket is a container for such objects. In some other cases, the data model is a distributed file system, such as a Hadoop Distributed File System (HDFS) (e.g., Apache Hadoop, made commercially available by Apache Software Foundation of Forest Hill, Maryland, is a software library that allows for the distributed processing of large data sets across clusters of hosts), where data is distributed and stored across multiple hosts, which may be geographically co-located servers on the same rack or on different racks in any arbitrary location in a data center. The distributed file system enables users to access file storage from multiple hosts through a computer network as if the user was accessing local storage. A distributed file system provides organizations with a scalable system and enables organizations to use legacy storage to save on costs of storage devices and hardware when storing large amounts of data.

A query language, such as structured query language (SQL), is a standardized and interpreted programming language for the retrieval of information from the database. A query language enables users to retrieve information from the database without knowing the internal structure of the database. Apache Impala (subsequently referred to herein as "Impala"), made commercially available by Apache Software Foundation of Forest Hill, Maryland, is an example query engine which uses SQL for processing large volumes of data ("big data") that are stored in data models, such as HDFS and/or Amazon S3. Impala provides low latency and high concurrency for BI/analytic queries, as well as scales linearly, even in multitenant environments (e.g., multi-tenancy is an architecture in which a single instance of a software application serves multiple customers/tenants).

Accordingly, such storage solutions provide a scalable, cost effective, and/or high throughput solution for reading large files. Database scalability refers to the capability of the database to handle growth in the amount of data and users. Database throughput refers to a measure of how many units of information the system can process in a given amount of time. However, small files (e.g., any file less than approximately 64 kilobytes (KB)) present a challenge for such storage solutions. Small files are generally desired in storage systems to reduce latency when processing subsequent read requests direct to data stored in the file (e.g., latency is directly proportional to file size).

Although it's straightforward to write small files to distributed file systems and/or object storage, queries over a large number of small files may run much slower (as compared to a smaller number of large files), or even fail to complete. Querying many small files incurs overhead to read metadata, conduct a non-contiguous disk seek, open the file, close the file, and repeat. The overhead may be only a few milliseconds per file, but when querying thousands and/or millions of files, those milliseconds are aggregated and result in a much longer period of time for processing.

HDFS performance, in particular, is adversely affected by the storage of small files. In particular, HDFS is efficient for storing and processing a small number of large files, rather than a large number of small files. The default block size for HDFS is 128 megabytes (MB) (and was previously 64 MB). Storing a 128 MB file takes the same one 128 MB block as storing a 16KB file. In addition, every file, directory, and block in HDFS is tracked in metadata that occupies between approximately 150 and 300 bytes per record of memory. As such, a hundred million small files may consume hundreds of gigabytes (GB) of memory, and may waste multiple terabytes (TB) by storing blocks that are mostly empty. Efficiency is further compromised as the amount of communication between hosts increases as greater numbers of files must be written, mapped, and queried in the distributed file system.

In some implementations, compaction is used to counter the issues with respect to small files in HDFS by consolidating many small files and rewriting them into fewer larger files. Following compaction, the query may run based on the newly created larger data file to allow for more efficient query/I/O performance. However, such efficiency comes at the cost of increased compute resource utilization and/or I/O consumption. Further, compaction may, in some cases, result in a loss/disappearance of one or more smaller files when creating the larger files where users do not coordinate with compaction.

In some other implementations, to avoid the adverse effects of having many small files, data producers may buffer data to produce larger files for storage. As used herein, a data producer refers to a user interface, system, or device that generates and/or collects data that is relevant to an organization (e.g., considered as a root source of data). Buffering data at a data producer prior to transfer of the data to the database for storage and querying, however, requires increased complexity at the data producer. Further, such buffering comes at the cost of increased latency given the data producer is configured to buffer the data prior to providing the data to the database thereby increasing an amount of time it takes to make data available to a user for querying.

It should be noted that the information included in the Background section herein is simply meant to provide a reference for the discussion of certain embodiments in the Detailed Description. None of the information included in this Background should be considered as an admission of prior art.

### Summary

One or more embodiments provide a method for storing data in a datastore. The method generally includes storing first data from a first data producer in a first file maintained in the datastore. The method further includes receiving a read input/output (I/O) request to read the first data stored in the first file. In response to receiving the read I/O request, the method further includes locking data in the first file to prevent further data from being stored in the first file. The method further includes processing the read I/O request. The method further includes creating a second file for storing at least second data from the first data producer.

Further embodiments include a non-transitory computer-readable storage medium comprising instructions that cause a computer system to carry out the above methods, as well as a computer system configured to carry out the above methods.

### Brief Description of the Drawings

Figure 1 illustrates an example schematic architecture for ingestion of data in a datastore to facilitate analytics and ad-hoc querying in which embodiments described herein may be implemented.
Figure 2 illustrates an example network environment in which embodiments described herein may be implemented.
Figure 3 is a call flow diagram illustrating example operations for data locking upon receipt of a read input/output (I/O) request, according to an example embodiment of the present disclosure.
Figure 4 is a workflow illustrating example operations for writing data from a first data producer to a datastore, according to an example embodiment of the present disclosure.
Figure 5 is a workflow illustrating example operations for locking data and creating a new file in the datastore, according to an example embodiment of the present disclosure.

To facilitate understanding, identical reference numerals have been used, where possible, to designate identical elements that are common to the figures. It is contemplated that elements disclosed in one embodiment may be beneficially utilized on other embodiments without specific recitation.

### Detailed Description

Data locking techniques, and more specifically, techniques for the locking of data upon the receipt of an input/output (I/O) read request are described herein. Data locking involves saving data to a file in a non-volatile datastore such that the contents of the file are locked and can be later retrieved (e.g., in response to receiving a subsequent I/O requesting to read data saved in the file). As used herein, locking contents of the file refers to making the contents of the file immutable using any suitable operation(s). According to embodiments described herein, data locking occurs when a first read request for a file is received requesting to read some or all of the data accumulated in the file (also referred to herein as "lock on read"). As such, lock on read techniques allow for the accumulation of data, from a data producer, into a file before the data is locked to the file, and a new file is created. In certain aspects, prior to locking the file, the file is stored in a temporary cache, and upon locking the file, the file is persisted to storage, which may be referred to as "persist on read."

Such techniques result in data that is promptly requested, after being accumulated in a file, being stored in a smaller size file, while data that is not promptly requested, after being accumulated in a different file, being stored in a larger size file. As such, both large and small size files may be created using the techniques described herein. A desire for lower latency, drives the need to create smaller size files more frequently, such that data stored in these files is available more quickly to a user. However, performance degrades when there are too many small files to process. As such, techniques herein help to create a balance between larger and smaller size files created for the file system. In particular, lock/persist on read techniques described herein help to optimize file system performance while reducing latency. For example, data that is promptly requested may be written more often to smaller size files in the file system thereby making such data available to a user more quickly and, in turn, decreasing latency in the system. Further, to limit the number of small files in the file system such that file system performance is not adversely impacted, data not promptly requested is written in larger size files in the file system. The creation of small and large sized files based on when read requests are received by the file system helps to create a tradeoff between decreased latency and file system performance such that both factors are considered and optimized. Further, data producers may no longer need to buffer data prior to transfer of the data to the file system to avoid the adverse effects of having many small files. Instead, data producers may transmit data to the file system without buffering, such that data is immediately available to users as soon as the data is in the file system, thereby further reducing latency where a user has requested the data.

In certain embodiments, the file system is configured to advertise files when created to aid query engines in query planning to allow improved/efficient query performance. For example, a distributed query engine (e.g., a query engine configured to query data from a one or more file systems, such as a Hadoop Distributed File System (HDFS), Amazon Simple Storage Service (S3), etc.) may have multiple levels of cache to speed up response times for queries, where at least one cache level (a "metadata cache") is used to store metadata about files in one or more file systems from which the query engine may query data. The metadata cache may store metadata about known files (and their replicas) stored on disks in each of the file systems. As such, the metadata cache may help to enable efficient query planning by the query engine. To maintain the metadata cache, the query engine may continuously determine when new files are added to each of the file systems. In some existing implementations, this is done by the query engine issuing a command to search for newly created files and updating the metadata as such. As an illustrative example, a query engine, such as Impala, may continuously and/or periodically issue a REFRESH command to check the underlying file systems for newly added files. Where one or more new files are detected, the query engine may update its metadata cache to include metadata about these new files. Constantly performing the REFRESH function to locate new files may increase resource usage at the query engine (especially in cases where multiple new files are added), and in some cases, may result in a waste of resources where no new files have been added since the last REFRESH function was performed. Embodiments described herein help to overcome this problem by advertising files to each query engine. In certain embodiments, advertising the file involves performing a callback to the query engine. Accordingly, each query engine may be aware of newly added files, based on the advertisement, and only issue callbacks when necessary to update their corresponding metadata cache. Further, in some cases, the file system may artificially delay advertising new files to meet requirements of minimizing metadata growth.

The techniques described herein for locking contents of a file may apply to files stored in any datastore. For example, the techniques may be applied to lock content of files maintained in any object store, any distributed file system, and/or the like.

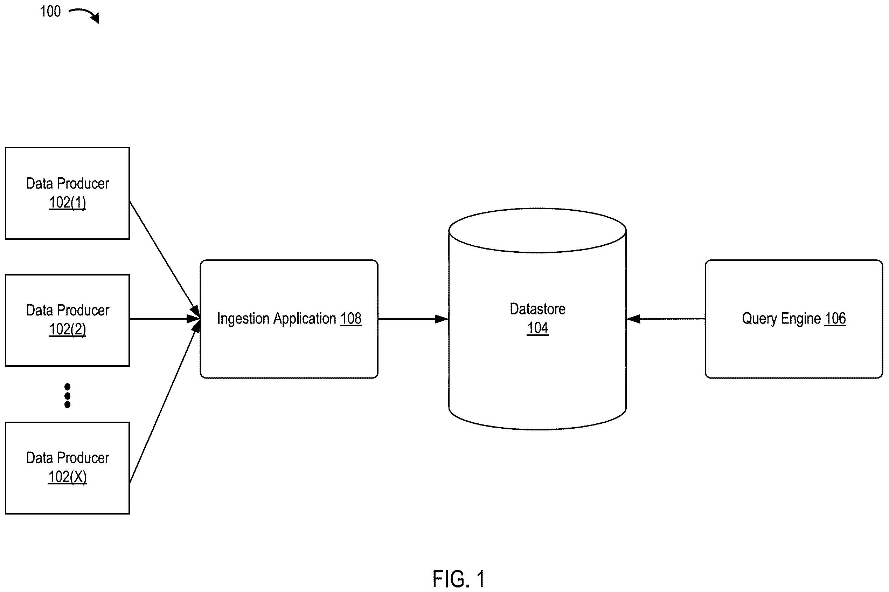

Figure 1 illustrates an example schematic architecture 100 for ingestion of data in a datastore to facilitate analytics and ad-hoc querying, according to an example embodiment of the present disclosure. As illustrated in Figure 1, any number of data producers 102(1)-(n) (each individually referred to herein as data producer 102 and collectively referred to herein as data producers 102) configured to execute within a computing infrastructure (e.g., a data center) are deployed. In certain embodiments, each data producer 102 owns its own data and its own domain logic (e.g., rules for determining how data may be created, stored, and/or changed at the data producer 102). In certain embodiments, data owned by each data producer 102 is private to that data producer 102 and can only be accessed via its application programming interface (API) prior to storage in the datastore 104. Data producers 102 may be applications and/or microservices (e.g., loosely coupled and independently deployable services which make up an application) running within the computing infrastructure. Examples of data producers 102 for a particular organization may include websites, systems that process transactions, external vendors, customer relationship management systems, etc.

To facilitate analytics and ad-hoc querying, data is gathered from each of the data producers 102 and stored in a central data repository (e.g., via an ingestion application 108, described in detail below). One such central data repository may be datastore 104 illustrated in Figure 1.

Datastore 104 is a storage system including one or more physical storage devices, servers, and/or that like that store data and manage access to the stored data. For example, in certain aspects, datastore 104 stores a database. In certain aspects, datastore 104 uses a file system. In certain embodiments, datastore 104 is a scalable relational database system (e.g., uses a structure that allows for the identification and access of data in relation to another piece of data in the datastore 104). In certain embodiments, datastore 104 uses a file system to store data distributed across multiple hosts and/or locations (e.g., a distributed file system (DFS)). In certain embodiments, datastore 104 is an object store configured to manage data as objects. In certain aspects, datastore 104 includes multiple physical storage devices, and data stored in the datastore 104 is distributed across the multiple physical storage devices.

Datastore 104 may organize stored data in a plurality of directories. A directory is a unique type of file that contains a collection of files. A collection of files stored within a directory may include files which are related to each other. A file is a collection of data that can be read from or written to. In certain embodiments, each file stores data ingested from a single data producer 102. In certain other embodiments, each file stores data ingested from multiple data producers 102.

Datastore 104 may be loaded periodically, e.g., every few minutes or hourly, with data ingested from various sources, such as operational systems. As shown in the example of Figure 1, data ingested by datastore 104 may be data from data producers 102. The process of cleaning, curating, and unifying this data into a single schema and loading it into datastore 104 is known as extract, transform, load (ETL) processing. As the variety of sources and data increases, the complexity of the ETL process also increases.

In certain embodiments, the ETL process is performed by an ingestion application 108. Ingestion application 108 may be any software program configured to (1) collect/read data from data producer(s) 102, (2) process the data according to one or more rules, and (3) write the processed data to datastore 104. Ingestion application 108 may be executing on a computing device, such as a host, virtual machine, or other virtual computing instance (VCI). In certain embodiments, ingestion application 108 extracts batches of data from data producer(s) 102 based on a schedule (e.g., referred to as "batch processing"). In certain other embodiments, event-driven ETLs may be used for data extraction and ingestion into datastore 104 by ingestion application 108. In particular, for event-driven ETLs, ingestion application 108 is triggered to extract, process, and load data into datastore 104 based on data being created, updated, modified, and/or deleted at data producer(s) 102, or based on other events occurring (e.g., referred to as "events'). Event-driven ETLs offer an alternative approach to batch processing, removing the need for fixed interval extraction of data by operating in a more reactive manner, by allowing changes to data at each data producer 102, to trigger ETL processing by ingestion application 108.

Although Figure 1 illustrates ingestion application 108 extracting data from data producers 102 and loading this data in datastore 104, in certain other embodiments, data producers 102 may each individually transmit data to datastore 104, where it will then be stored.

As described in detail below, data from data producers 102 received at datastore 104 may be accumulated in one or more files. The one or more files may initially be stored in memory or another suitable cache of datastore 104, prior to locking and persisting the one or more files on read to persistent storage of datastore 104. Alternatively, the one or more files may be stored in storage of datastore 104, prior to locking the one or more files on read. A single file that is actively receiving writes may exist in datastore 104 for each data producer 102 at a single point in time. Data from a data producer 102, received at datastore 104 (e.g., in some cases via ingestion application 108), may be accumulated in a file created for the data producer 102 until a read of some or all of the data in the file is requested. A data producer 102 may directly transmit the data to datastore 104 or an ingestion application 108 may be used to extract the data from data producer 102 and load such data in datastore 104. Receiving the read request may cause datastore 104 to lock the data to the file. Further, in cases where the file is stored in a cache, the data may be persisted to storage of the datastore 104 upon receiving the read request. Locking the data in the file may not allow for any subsequent changes to data stored in the file. Locking the file may trigger the creation of a new file for data producer 102 to store any future data received by datastore 104 until a read request for some or all of the data of that new file is received and processed.

A query engine 106 is introduced in architecture 100 to allow for the execution of queries against data stored in datastore 104. Query engine 106 is a piece of software that is built on top of datastore 104 and/or is executing on a computing device, such as a host, virtual machine, or other VCI. Query engine 106 is configured to receive requests for specific data stored in datastore 104 (e.g., from user(s)) and fulfill each of the requests by retrieving the data from datastore 104. Impala is an example query engine 106. In particular, Impala is an open source massively parallel processing (MPP) structured query language (SQL) query engine for querying data stored in a host cluster running Apache Hadoop.

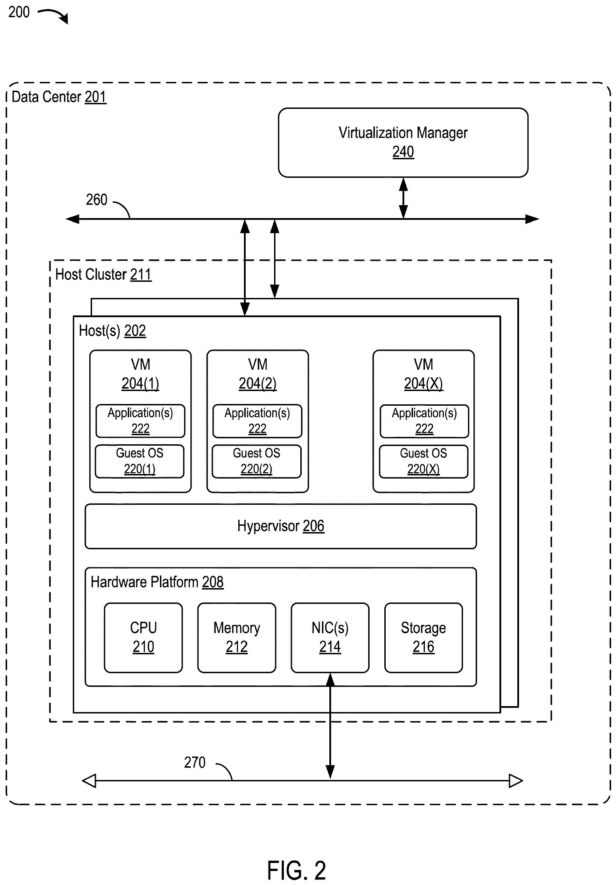

In certain embodiments, data producers 102, ingestion application 108, and/or query engine 106 are running on virtual and/or physical components, such as virtual and/or physical components in network environment 200 illustrated in Figure 2. Figure 2 illustrates an example network environment 200 in which embodiments described herein may be implemented. Networking environment 200 includes a data center 201 having one or more hosts 202, virtual machines (VMs) 204, a management network 260, a data network 270, and a virtualization manager 240. Data producers 102 and/or query engine 106 may be running on physical machines with hypervisors 206 (e.g., hosts 202) or without hypervisors 206. Data producers 102 and/or query engine 106 may be running on VMs 204 and/or other VCIs (not illustrated in Figure 2).

Host(s) 202 may be communicatively connected to data network 270 and management network 260. Data network 270 and management network 260 may be implemented as separate physical networks or as separate virtual local area networks (VLANs) on the same physical network. Data network 270 and management network 260 are also referred to as physical or "underlay" networks, and may be separate physical networks or the same physical network. As used herein, the term "underlay" may be synonymous with "physical" and refers to physical components of networking environment 200. As used herein, the term "overlay" may be used synonymously with "logical" and refers to the logical network implemented at least partially within networking environment 200.

Host(s) 202 may be geographically co-located servers on the same rack or on different racks in any arbitrary location in the data center. Host(s) 202 may be configured to provide a virtualization layer, also referred to as a hypervisor 206, that abstracts processor, memory, storage, and networking resources of a hardware platform 208 into multiple VMs 204.

In certain embodiments, hypervisor 206 may run in conjunction with an operating system (not shown) in host 202. In certain embodiments, hypervisor 206 can be installed as system level software directly on hardware platform 208 of host 202 (often referred to as "bare metal" installation) and be conceptually interposed between the physical hardware and guest operating systems (OSs) 220 executing in the VMs 204. It is noted that the term "operating system," as used herein, may refer to a hypervisor.

Each of VMs 204 implements a virtual hardware platform that supports the installation of guest OS 220 which is capable of executing one or more applications 222. Guest OS 220 may be a standard, commodity operating system. Examples of a guest OS 220 include Microsoft Windows, Linux, and/or the like. An application 222 may be any software program, such as a word processing program. An application 222 may be an example data producer 102 illustrated in Figure 1.

Host(s) 202 may be constructed on a server grade hardware platform 208, such as an x86 architecture platform. Hardware platform 208 of a host 202 may include components of a computing device such as one or more processors (CPUs) 210, system memory (e.g., random access memory (RAM)) 212, one or more network interfaces (e.g., network interface cards (NICs) 214), local storage resources 216, and other components (not shown). A CPU 210 is configured to execute instructions, for example, executable instructions that perform one or more operations described herein and that may be stored in the memory 212 and/or storage 216. The network interface(s) enable hosts 202 to communicate with other devices via a physical network, such as management network 260 and data network 270. Further, the network interface(s) may enable hosts 202 to connect to external storage.

Local storage resources 216 may be housed in or directly attached (hereinafter, use of the term "housed" or "housed in" may be used to encompass both housed in or otherwise directly attached) to hosts 202. Local storage resources 224 housed in or otherwise directly attached to the hosts 202 may include combinations of solid state drives (SSDs) or non-volatile memory express (NVMe) drives, magnetic disks (MD), or slower/cheaper SSDs, or other types of storages. Local storage resources 216 of hosts 202 may be leveraged to provide aggregate storage to VMs 204 running on hosts 202. The distributed storage may be an object-based store.

In certain embodiments, virtualization manager 240 is a computer program that executes in a host 202 in data center 201, or alternatively, virtualization manager 240 runs in one of VMs 204. Virtualization manager 240 is configured to carry out administrative tasks for the data center 201, including managing hosts 202, managing (e.g., configuring, starting, stopping, suspending, etc.) VMs 204 running within each host 202, provisioning VMs 204, transferring VMs 204 from one host 202 to another host 202, transferring VMs 204 between data centers, transferring application instances between VMs 204 or between hosts 202, and load balancing VMs 204 among hosts 202 within a host cluster 211. Virtualization manager 240 may carry out such tasks by delegating operations to hosts 202. Virtualization manager 240 takes commands as to creation, migration, and deletion decisions of VMs 204 and application instances on the data center 201. However, virtualization manager 240 also makes independent decisions on management of local VMs 204 and application instances, such as placement of VMs 204 and application instances between hosts 202.

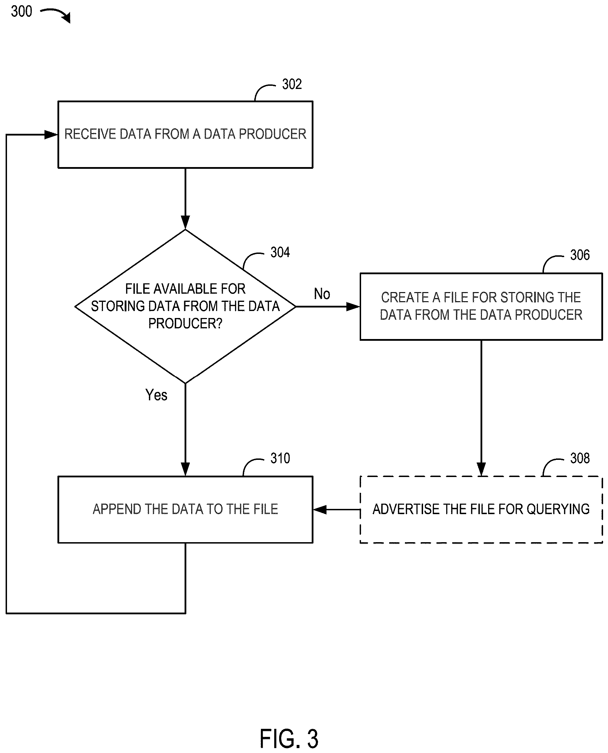

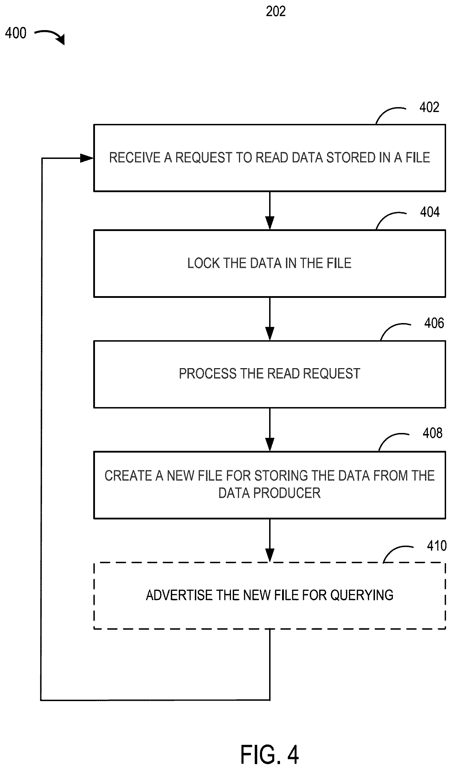

As described above, techniques provided herein allow for a tradeoff between decreased latency and file system performance, such that both factors are considered and balanced, by enabling the locking of a file upon a read of some or all of the data accumulated (e.g., from a data producer 102) in the file. Figure 3 is a workflow illustrating example operations 300 for writing data from a data producer 102 to a datastore 104, according to an example embodiment of the present disclosure. Figure 4 is a workflow illustrating example operations 400 for locking data and creating a new file in the datastore, according to an example embodiment of the present disclosure. Operations 300 comprise a loop of operations that are continually repeated to write data from the data producer 102 to datastore 104, while operations 400 comprise a loop of operations that are continually repeated to lock data and create new files in datastore 104 as new read requests are received by datastore 104. Operations 300 and operations 400 may occur asynchronously; however, an order in which operations 300 and operations 400 occur may be decided based on when data is received by datastore 104 and/or when read request(s) are received by datastore 104. As an illustrative example, datastore 104 may first receive data from data producer 102 which initiates operations 302-310 and then subsequently receive a read request from query engine 106 which initiates operations 402-410. As another illustrative example, datastore 104 may receive a first set of data from data producer 102 which initiates operations 302-310, subsequently receive a second set of data from data producer 102 which again initiates operations 302-310, and then, only after receiving data twice from data producer 102, receive a read request from query engine 106 which initiates operations 402-410.

Operations 300 begin, at operation 302, by datastore 104 receiving data from data producer 102. For example, datastore 104 may receive data directly from data producer 102. In some other cases (not illustrated), datastore 104 may receive data from data producer 102 via ingestion application 108 (e.g., configured to perform ETL processing). At operation 304, datastore 104 determines whether a file is available for storing data from the data producer 102. In certain embodiments, a file is available where data was previously received from data producer 102 and stored at datastore 104. In certain embodiments, a file is available where a previous read request initiated the creation of a file for data producer 102.

In cases where, at operation 304, datastore 104 determines that a file is not available for storing data from data producer 102, at operation 306, datastore 104 creates a file for storing the data received from data producer 102. At operation 310, datastore 104 adds the data received at operation 302 to this created file.

Optionally, at operation 308, datastore 104 may advertise the created file for querying. As describe above, datastore 104 may be configured to advertise files when created to aid query engines in query planning to allow for efficient query responses. In particular, query engine 106 may store metadata about available files advertised to query engine 106 such that when query engine 106 receives a read request for some or all of the data stored in the file, query engine 106 is already aware of the file and can plan its query accordingly based on metadata stored, at query engine 106, about the file.

Alternatively, where, at operation 304, datastore 104 determines that a file is available for storing data from data producer 102 (e.g., has been previously created), datastore 104 may use this file for storing the data. In particular, at operation 310, datastore 104 appends the data received at operation 302 to this previously-created file, such that data from data producer 102 continues to accumulate in the file (e.g., thereby increasing the size of the file) until a read for some or all of the data in the file is received by datastore 104.

Subsequent to operation 310, operations 300 return to operation 302 where datastore 104 waits until new data is received from data producer 102 or, as described with respect to operations 400 in Figure 4, a read I/O request is received for the file.

The workflow of Figure 4 illustrates example operations 400 for locking (and optionally persisting) data and creating a new file in the datastore when a read I/O request is received. Operations 400 begin, at operation 402, by datastore 104 receiving a read request to read some or all of the data stored in a file maintained by datastore 104. The read request may be initiated by a user and transmitted to query engine 106 for processing. In response to receiving the query request from the user, query engine 106 forwards the query request to datastore 104 to retrieve the requested data.

In response to receiving the read request, datastore 104 may perform data locking (and optionally persistence) operations for data accumulated in the requested file. For example, at operation 404, datastore 104 locks the data in the file (and optionally persists the file to storage). As such, no subsequent changes may be made to data within the file (e.g., no data may be deleted, modified, and/or added to the file). In certain embodiments, locking data in the file removes the need for query engines 106 to constantly check for updates/modifications to data of files stored in datastore 104 for purposes of updating data about these files stored in caching layers of the query engines 106. For example, in Impala, an INVALIDATE METADATA command is implemented for detecting file changes. Impala may issue this command to identify changes to data of one or more files stored at datastore 104 and update data in their cache(s) accordingly. Because embodiments herein lock the contents of the file such that subsequent changes to data in the file cannot be made, the INVALIDATE METADATA command may no longer be necessary and, as such, resources at the query engine previously used for issuing such a command may be saved.

At operation 406, datastore 104 and query engine 106 process the read request by retrieving the requested data from the file and providing the requested data to the requestor of the data (e.g., the user).

At operation 408, datastore 104 creates a new file for storing the data from data producer 102. In particular, because the contents of the file previously-used to accumulate data is locked (and persisted) to datastore 104, datastore 104 may need to generate a new file to accumulate new data that may be subsequently received from data producer 102. In certain embodiments, the creation of the new file, at operation 408, occurs immediately after processing the read request at operation 406. In certain other embodiments, the creation of the new file, at operation 408, occurs when a subsequent write request is received to write data (and a file is not available). Optionally, at operation 410, datastore 104 may advertise the created file for querying.

Because operation 404 for locking the data is performed in response to receiving the read request at operation 402, the time in which a read request is received may dictate how large the file is when locked. For example, if a large amount of data (e.g., from data producer 102) is accumulated in the file prior to receiving the read request at operation 402, then when the data is locked at operation 408, the file may be a larger sized file. Because the file is a large size file, data in the file may not be readily available to a user, thereby increasing latency in the system. However, having a larger size file may help to improve datastore 104 performance by increasing the number of large data files stored in datastore 104, as opposed to having only small files. On the other hand, if a small amount of data (e.g., from data producer 102) is accumulated in the file prior to receiving the read request at operation 402, then when the data is locked at operation 408, the file may be a smaller sized file. The smaller sized file may allow the data in the file to be available more quickly, thereby reducing latency. However, having too many of such smaller sized files may negatively impact system performance. Thus, creating small and large sized files, based on when read requests are received, helps to create a tradeoff between decreased latency and file system performance such that both factors are considered and optimized. In other words, such lock/persist on read techniques help to make data availability time shorter for data promptly requested to be read while still creating large size files, when the data isn't being read.

Subsequent to operation 408 or operation 410 (e.g., where performed), operations 400 return to operation 402 where datastore 104 waits until a new read request is received from query engine 106 or, as described with respect to operations 300 in Figure 3, new data is received from data producer 102.

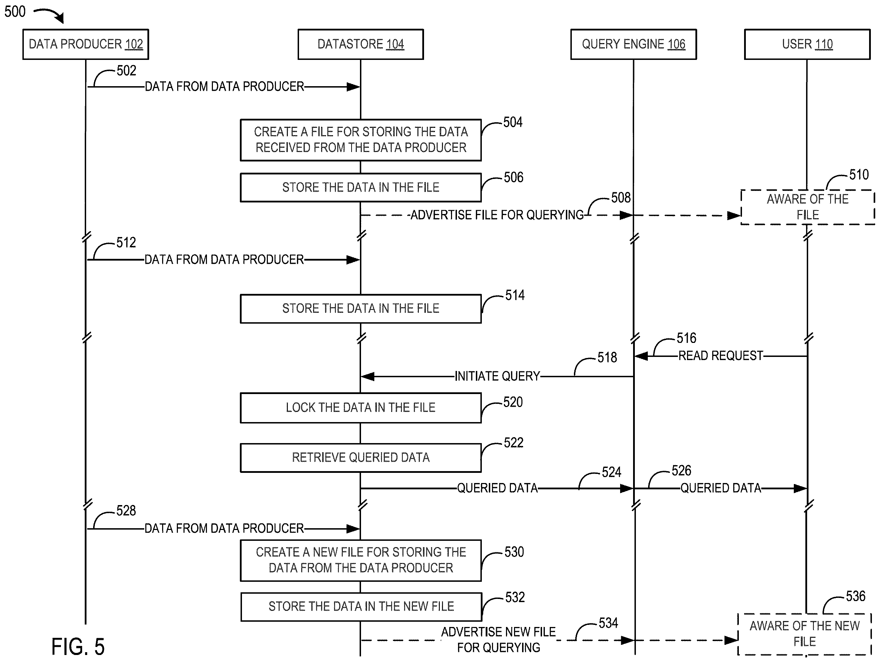

Figure 5 is a call flow diagram illustrating example operations 500 for data locking upon the receipt of a read I/O request, according to an example embodiment of the present disclosure. Operations 500 may be performed by a data producer 102, datastore 104, and query engine 106 illustrated in Figure 1. Operations 500 may perform lock on read operations based on a read I/O request received by query engine 106 from a user 110 (e.g., customer).

Operations 500 may include a combination of operations previously described with respect to Figure 3 and Figure 4. Specifically, operations 500 combine both operations 300 and operations 400 together to illustrate operations that may occur in different scenarios: (1) a scenario where data from data producer 102 is received when a file has not been previously created, (2) a scenario where data from data producer 102 is received when a file has been previously created, (3) a scenario where a read request is received from user 110, and (4) a scenario where data from data producer 102 is received subsequent to creating a new file (and locking a previously-created file).

Operations 500 begin, at operation 502, by datastore 104 receiving data from data producer 102. Although not meant to be limiting to this particular example, it may be assumed that a file has not been previously created for storing data received from data producer 102. As such, at operation 504, datastore creates a file for storing the data received from data producer 102. In certain embodiments, the file is created to belong to a directory designated by data producer 102. At operation 506, datastore 104 stores the data received from data producer 102 (e.g., at operation 502) in the created file. In certain embodiments, the data is manipulated prior to storage in the created file. Optionally, at operation 508, datastore 104 may advertise the file for querying to query engine 106 such that query engine 106 is aware of this new file (e.g., for purposes of updating its metadata cache). Optionally, at operation 510, datastore 104 may advertise the file for querying to user 110. Although operations 508 and 510 are illustrated as occurring after operation 506, in certain other embodiments, operations 508 and 510 occur prior to operation 506.

Immediately after or after a period of time has passed since operation 506 (or optionally 508 or 510), at operation 512, datastore 104 receives another set of data from data producer 102. Because a file has been previously created for accumulating data received from data producer 102, at operation 514, the data received by datastore 104 is stored in the previously-created file. In other words, the data is appended to the file.

Immediately after or after a period of time has passed since operation 514, at operation 516, user 110 issues a read I/O requesting to read some or all of the data stored in the (not locked) file corresponding to data producer 102. User 110 may create and submit this read request via a user interface (UI). Query engine 106 may receive and forward this read request to datastore 104.

In response to receiving the read request, at operation 520, datastore 104 locks the file. At operations 522 and 524, respectively, datastore 104 retrieves the queried data from the file and returns this data to query engine 106. At operation 526, query engine provides this data to user. In certain embodiments, this data is provided to the user, such as via presentation of the data in a UI. In certain embodiments, a footer is also added to the end of the file prior to reading the data stored in the file.

Immediately after or after a period of time has passed since operation 526, at operation 528, datastore 104 receives another set of data from data producer 102. Because a new file has not been previously created for accumulating data received from data producer 102 (e.g., since receiving the read request at operation 516 and providing the queried data in response to receiving the read request, at operation 526), at operation 530, datastore 104 creates a new file for storing the data received by datastore 104 from data producer 102. At operation 532, the data received by datastore 104 is stored in the created file. In other words, the data is appended to the file.

Optionally, at operation 534, datastore 104 may advertise the file for querying to query engine 106 such that query engine 106 is aware of this new file (e.g., for purposes of updating its metadata cache). Optionally, at operation 536, datastore 104 may advertise the file for querying to user 110.

Per operations 300, 400, and 500 illustrated in Figures 3, 4, and 5, respectively, the techniques described herein enable to the creation of fewer and larger files to improve datastore performance, help to decrease system latency for I/O read requests, and effectively work with the caching layers of query engines 106.

Though certain embodiments are described with respect to one data producer 102 being associated with a given file, the techniques herein are similarly applicable to multiple data producers being associated with a given file. Accordingly, any data received from any of the multiple data producers may be stored in the given file. Further, the given file may be locked and a new file created when a read for any data stored in the given file is received.

It should be understood that, for any process described herein, there may be additional or fewer steps performed in similar or alternative orders, or in parallel, within the scope of the various embodiments, consistent with the teachings herein, unless otherwise stated.

The various embodiments described herein may employ various computer-implemented operations involving data stored in computer systems. For example, these operations may require physical manipulation of physical quantities-usually, though not necessarily, these quantities may take the form of electrical or magnetic signals, where they or representations of them are capable of being stored, transferred, combined, compared, or otherwise manipulated. Further, such manipulations are often referred to in terms, such as producing, identifying, determining, or comparing. Any operations described herein that form part of one or more embodiments of the invention may be useful machine operations. In addition, one or more embodiments of the invention also relate to a device or an apparatus for performing these operations. The apparatus may be specially constructed for specific required purposes, or it may be a general purpose computer selectively activated or configured by a computer program stored in the computer. In particular, various general purpose machines may be used with computer programs written in accordance with the teachings herein, or it may be more convenient to construct a more specialized apparatus to perform the required operations.

The various embodiments described herein may be practiced with other computer system configurations including hand-held devices, microprocessor systems, microprocessor-based or programmable consumer electronics, minicomputers, mainframe computers, and the like.

One or more embodiments of the present invention may be implemented as one or more computer programs or as one or more computer program modules embodied in one or more computer readable media. The term computer readable medium refers to any data storage device that can store data which can thereafter be input to a computer system-computer readable media may be based on any existing or subsequently developed technology for embodying computer programs in a manner that enables them to be read by a computer. Examples of a computer readable medium include a hard drive, network attached storage (NAS), read-only memory, random-access memory (e.g., a flash memory device), a CD (Compact Discs) --CD-ROM, a CD-R, or a CD-RW, a DVD (Digital Versatile Disc), a magnetic tape, and other optical and non-optical data storage devices. The computer readable medium can also be distributed over a network coupled computer system so that the computer readable code is stored and executed in a distributed fashion.

Although one or more embodiments of the present invention have been described in some detail for clarity of understanding, it will be apparent that certain changes and modifications may be made within the scope of the claims. Accordingly, the described embodiments are to be considered as illustrative and not restrictive, and the scope of the claims is not to be limited to details given herein, but may be modified within the scope and equivalents of the claims. In the claims, elements and/or steps do not imply any particular order of operation, unless explicitly stated in the claims.

Virtualization systems in accordance with the various embodiments may be implemented as hosted embodiments, non-hosted embodiments or as embodiments that tend to blur distinctions between the two, are all envisioned. Furthermore, various virtualization operations may be wholly or partially implemented in hardware. For example, a hardware implementation may employ a look-up table for modification of storage access requests to secure non-disk data.

Certain embodiments as described above involve a hardware abstraction layer on top of a host computer. The hardware abstraction layer allows multiple contexts to share the hardware resource. In one embodiment, these contexts are isolated from each other, each having at least a user application running therein. The hardware abstraction layer thus provides benefits of resource isolation and allocation among the contexts. In the foregoing embodiments, virtual machines are used as an example for the contexts and hypervisors as an example for the hardware abstraction layer. As described above, each virtual machine includes a guest operating system in which at least one application runs. It should be noted that these embodiments may also apply to other examples of contexts, such as containers not including a guest operating system, referred to herein as "OS-less containers" (see, e.g., www.docker.com). OS-less containers implement operating system-level virtualization, wherein an abstraction layer is provided on top of the kernel of an operating system on a host computer. The abstraction layer supports multiple OS-less containers each including an application and its dependencies. Each OS-less container runs as an isolated process in user space on the host operating system and shares the kernel with other containers. The OS-less container relies on the kernel's functionality to make use of resource isolation (CPU, memory, block I/O, network, etc.) and separate namespaces and to completely isolate the application's view of the operating environments. By using OS-less containers, resources can be isolated, services restricted, and processes provisioned to have a private view of the operating system with their own process ID space, file system structure, and network interfaces. Multiple containers can share the same kernel, but each container can be constrained to only use a defined amount of resources such as CPU, memory and I/O. The term "virtualized computing instance" as used herein is meant to encompass both VMs and OS-less containers.

Many variations, modifications, additions, and improvements are possible, regardless the degree of virtualization. The virtualization software can therefore include components of a host, console, or guest operating system that performs virtualization functions. Plural instances may be provided for components, operations or structures described herein as a single instance. Boundaries between various components, operations and data stores are somewhat arbitrary, and particular operations are illustrated in the context of specific illustrative configurations. Other allocations of functionality are envisioned and may fall within the scope of the invention(s). In general, structures and functionality presented as separate components in exemplary configurations may be implemented as a combined structure or component. Similarly, structures and functionality presented as a single component may be implemented as separate components. These and other variations, modifications, additions, and improvements may fall within the scope of the appended claim(s).

## Claims

1. A method for storing data in a datastore (104), the method comprising:
storing first data from a first data producer (102) in a first file maintained in the datastore (104);
receiving a read input/output, I/O, request to read the first data stored in the first file;
in response to receiving the read I/O request, locking data in the first file to prevent further data from being stored in the first file;
processing the read I/O request; and
creating a second file for storing at least second data from the first data producer (102).

2. The method of claim 1, further comprising:
prior to storing the first data from the first data producer (102) in the first file:
receiving third data from the first data producer (102);
determining a file for storing data received from the first data producer (102) has not been previously created;
in response to determining the file for storing the data received from the first data producer (102) has not been previously created, creating the first file; and
storing third data from the first data producer (102) in the first file.

3. The method of claim 2, wherein:
subsequent to storing first data from the first data producer (102) in the first file, the data in the first file comprises the first data and the third data.

4. The method of any of claims 1 to 3, further comprising advertising the second file.

5. The method of any of claims 1 to 4, wherein:
the first data comprises data generated at the first data producer (102), wherein the first data producer (102) is configured to automatically transmit the first data to the datastore (104) when the first data is generated.

6. The method of any of claims 1 to 5, wherein processing the read I/O request comprises:
retrieving the first data from the first file; and
returning the first data to a requestor which initiated the read I/O request.

7. The method of any of claims 1 to 6, comprising at least one of the following features:
wherein the datastore (104) comprises a distributed file system or object storage;
wherein, prior to receiving the read I/O request, the first file is maintained in a cache, and further comprising, in response to receiving the read I/O request, storing the first file in a storage.

8. A system comprising:
one or more processors (210); and
at least one memory, the one or more processors (210) and the at least one memory (212) configured to:
store first data from a first data producer (102) in a first file maintained in a datastore (104);
receive a read input/output, I/O, request to read the first data stored in the first file;
in response to receiving the read I/O request, lock data in the first file to prevent further data from being stored in the first file;
process the read I/O request; and
create a second file for storing at least second data from the first data producer (102).

9. The system of claim 8, wherein the one or more processors (210) and the at least one memory (212) are further configured to:
prior to storing the first data from the first data producer (102) in the first file:
receive third data from the first data producer (102);
determine a file for storing data received from the first data producer (102) has not been previously created;
in response to determining the file for storing the data received from the first data producer (102) has not been previously created, create the first file; and
store third data from the first data producer (102) in the first file.

10. The system of claim 9, wherein:
subsequent to storing first data from the first data producer (102) in the first file, the data in the first file comprises the first data and the third data.

11. The system of claim 9 or 10, comprising at least one of the following features:
wherein the one or more processors (210) and the at least one memory (212) are further configured to advertise the second file;
wherein:
the first data comprises data generated at the first data producer (102), wherein the first data producer (102) is configured to automatically transmit the first data to the datastore (104) when the first data is generated;
wherein to process the read I/O request comprises to:
retrieve the first data from the first file; and
return the first data to a requestor which initiated the read I/O request;
wherein the datastore (104) comprises a distributed file system or object storage;
wherein, prior to receiving the read I/O request, the first file is maintained in a cache, and the one or more processors (210) and the at least one memory (212) are further configured to, in response to receiving the read I/O request, store the first file in a storage (216).

12. A non-transitory computer-readable medium comprising instructions that, when executed by one or more processors (210) of a computing system, cause the computing system to perform operations for storing data in a datastore (104), the operations comprising:
storing first data from a first data producer (102) in a first file maintained in the datastore (104);
receiving a read input/output, I/O, request to read the first data stored in the first file;
in response to receiving the read I/O request, locking data in the first file to prevent further data from being stored in the first file;
processing the read I/O request; and
creating a second file for storing at least second data from the first data producer (102).

13. The non-transitory computer-readable medium of claim 12, wherein the operations further comprise:
prior to storing the first data from the first data producer (102) in the first file:
receiving third data from the first data producer (102);
determining a file for storing data received from the first data producer (102) has not been previously created;
in response to determining the file for storing the data received from the first data producer (102) has not been previously created, creating the first file; and
storing third data from the first data producer (102) in the first file.

14. The non-transitory computer-readable medium of claim 13, wherein:
subsequent to storing first data from the first data producer (102) in the first file, the data in the first file comprises the first data and the third data.

15. The non-transitory computer-readable medium of any of claims 12 to 14, wherein the operations further comprise advertising the second file.
